# EUROPEAN PATENT APPLICATION

(11) **EP 2 168 751 A1**
(43) Date of publication of application: **31.03.2010**
(21) Application number: 08305607.7
(22) Date of filing: 29.09.2008
(51) Int. Cl.: B29C 49/02, B29B 11/14, B29C 49/06, B29B 11/08, B29B 11/12

(54) **Method of making a container such as a bottle from a preform made of thermoplastic polymer**

(71) Applicant: Nestec S.A., 1800 Vevey (CH)
(72) Inventor: Detrois, Christian, 88190, Golbey (FR); Didier, Eric, 88800 Remoncourt (FR)
(74) Representative: Nuss, Pierre

(57) **Abstract**

Method of making a container having an elongated body equipped with a neck, such as a bottle (2), from a preform (1) made of thermoplastic polymer, said bottle (2) having special dimensional parameters.
It essentially comprises a step of stretching and blowing a thin- walled (10) preform (I) with an average thickness (e) of its wall (10) less than 2 mm and an aspect ratio u = l/e, l being the length of the thin-walled preform (1), superior to 45.
A thin-walled preform and a bottle are also claimed.

## Description

The present invention concerns a method of making a container having an elongated body equipped with a neck, such as a bottle, from a preform made of thermoplastic polymer, preferably a thermoplastic polyester, most preferably a polyester comprising at least 92.5 % in number of unities derived of a terephthalic acid and ethylen glycol. An other subject of the present invention is the bottle or similar container obtained by said method and a thin-walled preform intended for forming such a bottle or similar container obtained by said method.

We know, at the present time, bottles made of polyester material intended to have water, juice carbonated soft drink and the like in it. Among the polyesters comprising at least 92.5 % in number of unities derived of a terephthalic acid and ethylen glycol, polyethylene terephthalate (PET) is known, which is widely used for producing bottles for liquids. The main attributes of which are the transparency, the low weight, a better barrier to gases than polypropylene and the possibility of producing various shapes depending on the profile of the container, such as a bottle, that it is desired to obtain.

It is known to manufacture a bottle by injection moulding starting from a preform made of polyester such as PET, that has the shape of a test tube, the open end of which already has the dimensions and the definitive shape of the neck. This preform is reheated, then stretched longitudinally by means of a stretching shaft or rod and blown in a mould by introducing pressurized air inside the preform. The bottle thus formed by omnidirectional deformation of the preform is then subjected, in a sterile environment, to an aseptic filling intended to disinfect its inner and outer surface before its standard filling, then dried with hot air at a temperature of 70 °C. The aseptic treatment consists in using, for example, hydrogen peroxide (H₂O₂) and sterilized water at a temperature of 140°C.

However, the mechanical characteristics of PET greatly degrade when it is subjected to a high temperature which leads to a deformation of the material, due to its shape memory, which has a tendency to revert to its initial form. It is in this way that, during the step of disinfecting bottles which are exposed to hot gases for a certain treatment time, it has been observed that the bottles shrink and that bottles of a certain weight tend to shrink less than bottles of a lower weight.

In order to limit the shrinkage of the bottles, a standard solution consists therefore in increasing the amount of PET material and therefore the weight of the preform and of the bottle by varying its dimensions, the length and/or perimeter and its wall thickness.

Nevertheless, these dimensional variations are obstacles to any reduction of the manufacturing costs for the containers via a reduction in the amount of PET material due to preforms that are shorter and/or have a smaller perimeter and/or a smaller thickness.

One solution for reducing the manufacturing costs while retaining or increasing the weight of a preform, via variation of its dimensional parameters such as the length or the perimeter, could be to reduce, in compensation, the thickness of the wall of said preform.

However, in the field of injection-moulding of parts such as a preform made from PET material, it is essential, in order to ensure an easy and effective filling of the mould, not to exceed certain threshold values, especially as regards the thickness of the wall of said preform which must have a value greater than 2.0 mm, and the ratio of the length of the preform to the wall thickness of said preform which must be less than 45.

If it is envisaged to exceed these threshold values, one solution could then consist, during the injection-moulding process of the preform, in increasing the cavity temperature or the injection rate and the pressure. However, a modification of the cavity temperature will generate a crystallization of the PET material which will have the negative effect of rendering the container less transparent. Furthermore, an increase in the injection rate and the pressure will cause damage to the structure made of PET material due to a high shear rate.

Furthermore, the polyesters such as PET used in the production of bottles for food use have usage properties, especially an effect known as a "barrier effect" to various gases (steam, oxygen, carbon dioxide, etc.) which increase with the intrinsic viscosity (IV) of the material used, that is to say with the length of the polymer chains used. Therefore, materials having good gas-impermeability properties are generally viscous (IV between 0.72 dl/g and 0.83 dl/g).

By intrinsic viscosity (IV) is meant, the viscosity of a solution of polymer at a concentration of zero, this value being calculated by determining a viscosity index (VI) in dl/g by following formula: IV = -10⁻¹VI²+0,94VI+0,0122 and said index being measured on a polymer solution of 0,5 g of polymer dissolved in 100 ml of a solvent mixture of orthodichlorobenzene and phenol (50/50 by weight) at 25 °C according to norm ISO 1628/5 in date of 15/06/1986.

The objective of the present invention is to overcome these drawbacks by providing a method of making a container having an elongated body equipped with a neck, such as a bottle, from a preform made of thermoplastic polymer, preferably a thermoplastic polyester, most preferably a polyester comprising at least 92.5 % in number of unities derived of a terephthalic acid and ethylen glycol, that limits the shrinkage effects of the bottle, thus obtained during the high-temperature aseptic filling phase.

Studies carried out by the present applicant have shown that it is not the amount of material and therefore the resulting weight which is the cause of this bottle shrinkage, but the dimensional parameter values of the preform and of the final bottle which generate stretching ratios that are too high. Among the stretching ratios, three, namely: the stretching ratio "a" of the perimeter, the stretching ratio "b" of the length and the stretching ratio "c" of the surface, are considered to be significant.

In particular, it has been observed that for two preforms having different dimensions and a substantially identical weight, the stretching ratios a, b and c were higher for the preform having smaller dimensions so that the shrinkage of the bottle obtained from the preform having smaller dimensions was greater than the shrinkage of the bottle obtained with the other preform having larger dimensions.

Consequently, these results show that, contrary to the current preconceived opinions that assert that the amount of PET material (and therefore the weight) should be the cause of the shrinkage of the bottles, it is possible to maintain or reduce the weight of a preform and to obtain, by modifying its dimensional parameters, lower stretching ratios and therefore to limit the shrinkage of said bottles.

In view of these results, the present invention provides a method of making a container having an elongated body equipped with a neck, such as a bottle, from a preform made of thermoplastic polymer, which allows to limit the shrinkage of the final bottle when said final bottle is subjected to high temperature, particularly during the step of its disinfection.

The method, according to the present invention, of making a container having an elongated body equipped with a neck, such as a bottle, from a preform made of thermoplastic polymer, preferably a thermoplastic polyester, most preferably a polyester comprising at least 92.5 % in number of unities derived of a terephthalic acid and ethylen glycol, the open end of said preform having the shape and the dimensions of the neck of the final bottle, said bottle having the following dimensional parameters:
Pb: maximal outside perimeter of the final bottle;
L(½): lateral half-length of the final bottle, that is to say the length of the final bottle measured from its base to the neck along its shape;
is characterized in that it essentially comprises a step of stretching and blowing a thin-walled preform with, on the one hand, the following dimensional parameters :
Pp: average perimeter of the neutral fibre of the thin-walled preform measured from the base of the preform to the neck, said perimeter being the length of the neutral fibre in a cross section of the preform;
1(½): lateral half-length of the thin-walled preform, that is to say the length of the thin-walled preform measured from its base to the neck;
1: length of the preform;
e: average thickness of the wall of the thin-walled preform, from the base of said preform to the neck;
u : aspect ratio, u =1/e;
and, on the other hand, relating to the final bottle, the following stretching ratios a, b and c, with : a = Pb / Pp; b = L(½) /1(½); c = a x b;
said dimensional parameters being set to fulfil the following threshold conditions :
   ● e<2mm and u>45;
      and the stretching and blowing step being carried out so that said stretching ratios fulfil the following conditions:
   ● a<5; b<4 and c<16.

The invention will be better understood thanks to the description below which relates to one preferred embodiment, given by way of non-limiting example, and explained with reference to the appended schematic drawings, in which:
- the figure 1 represents a schematic cross-sectional view of a bottle made from a thin-walled preform, according to the present invention,
- the figure 2a represents a schematic cross-sectional part view of a thin-walled preform, according to the invention, of which the thickness of the wall varies along its body,
- the figure 2b represents a cross section view according to A-A of the figure 2a showing the neutral fiber of said cross section of the preform.

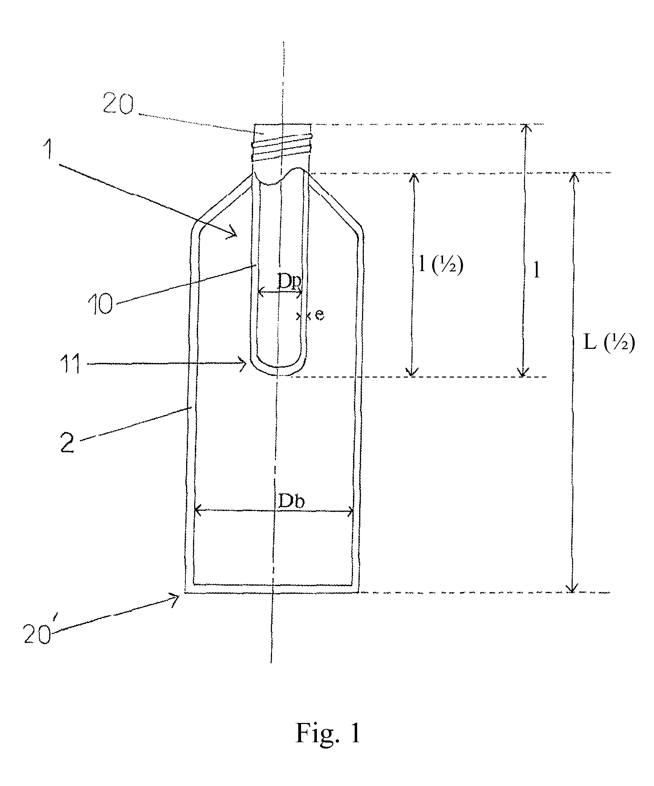

The figure 1 shows a final bottle 2 which comprises an elongated body equipped with a neck 20 and which is manufactured from a preform 1 made of thermoplastic polymer, preferably a thermoplastic polyester, most preferably a polyester comprising at least 92.5 % in number of unities derived of a terephthalic acid and ethylen glycol, the open end of said preform 1 having the shape and the dimensions of the neck 20 of the final bottle 2, said final bottle 2 having the following dimensional parameters:
Pb: maximal outside perimeter of the final bottle 2;
L(½): lateral half-length of the final bottle 2 that is to say the length of the final bottle 2 measured from its base 20' to the neck 20, along its shape.

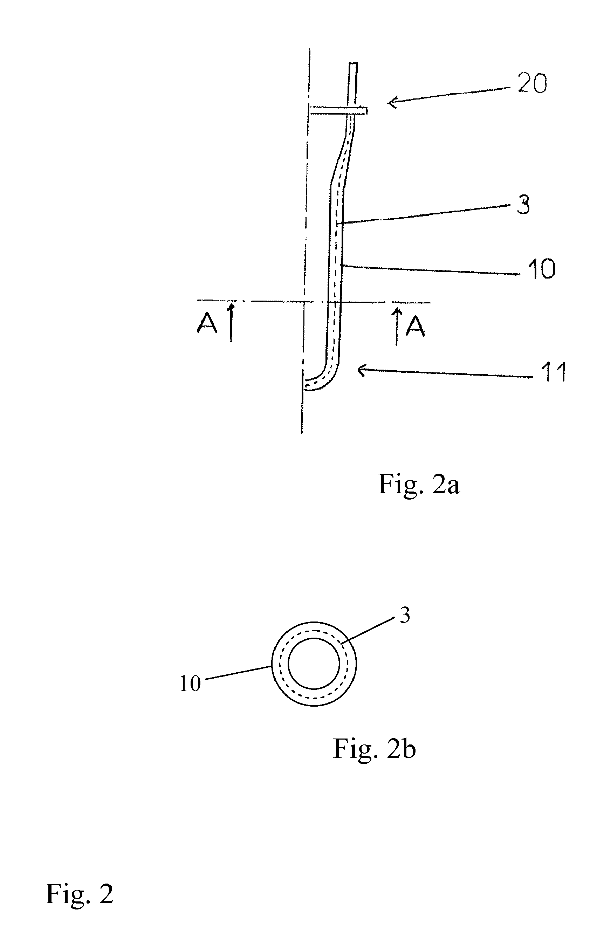

The method, according to the present invention, essentially comprises a step of stretching and blowing a thin-walled 10 preform 1 with, on the one hand, the following dimensional parameters :
Pp: average perimeter of the neutral fibre 3 (figure 2b) of the preform 1 measured from the base 11 of the preform 1 to the neck 20 (figure 2a), said perimeter being the length of the neutral fibre 3 in a cross section of the thin-walled 10 preform 1;
1(½): lateral half-length of the preform 1, that is to say the length of the thin-walled 10 preform 1 measured from its base 11 to the neck 20, along its shape;
1: length of the thin-walled 10 preform 1;
e: average thickness of the wall 10 of the thin-walled 10 preform 1, from the base 11 of said thin-walled 10 preform 1 to the neck 20;
u : aspect ratio, u =1/e;
and, on the other hand, relating to the final bottle 2, the following stretching ratios a, b and c, with : a = Pb / Pp; b = L(½) / 1(½); c = a x b;
said dimensional parameters being set to fulfil the following threshold conditions :
   ● e<2 mm and u>45;
      and the stretching and blowing step being carried out so that said stretching ratios fulfil the following conditions:
   ● a<5; b<4 and c<16;

Such thin-walled 10 preforms 1, according to the invention, are preferably made of a thermoplastic polymer, preferably a thermoplastic polyester, most preferably a polyester, such as PET, comprising at least 92.5 % in number of unities derived of a terephthalic acid ethylen glycol

A thin-walled 10 preform 1, according to the present invention, may be produced by a process which consists essentially in :
- injecting the hot plastic melt of the polymer in a not completely closed mold,
- closing the mold,
- pressing the melt in its final shape, and
- extracting the thin-walled 10 preform 1 from the mold.

In a variant, the thin-walled 10 preform 1 may be produced by a process which consists in :
- putting the moulding polymer in an open mold,
- closing the mold, and
- pressing the melt in its final shape, and
- extracting the thin-walled 10 preform 1 from the mold.

It is to be noted that various compression moulding operations are known for making plastic objects, see for exemple EP 1 480 803 or WO 01/32390.

A thin-walled 10 preform 1, according to the invention, may also be injected by multiple injection gates, by gas or fluid injection technology, with very high pressure or melt temperature (pressure > 150 bar and temperature > 280 °C). It can also be extruded as a tube and formed to a preform 1 with one open end and a neck 20 finish or made out of two pieces, for exemple by friction-welding to connect a neck 20 on the preform 1 body.

In a another variant, the thin-walled 10 preform 1 may also be produced by using intrinsic viscosity (IV) polymer. By intrinsic viscosity (IV) is meant, the viscosity of a solution of polymer at a concentration of zero, this value being calculated by determining a viscosity index(VI) by following formula: IV = -10⁻¹VI+0,94VI+0,0122 and said index being measured on a polymer solution of 0,5 g of polymer dissolved in 100 ml of a solvent mixture of orthodichlorobenzene and phenol (50/50 by weight) at 25 °C according to norm ISO 1628/5 in date of 15/06/1986. The intrinsic viscosity (IV) is, advantageously, less than or equal to 0.7 dl/g. Preferably, a polymer is selected which has an IV, preferably, between 0.45 dl/g and 0.65 dl/g and, most preferably, between 0.5 dl/g and 0.6 dl/g.

Advantageously, the polyester is obtained from terephthalic acid, its esters or a mixture thereof and of aliphatic diols such as ethylene glycol, 1,3-propanediol or 1,4-butanediol.

The preferred monomers are terephthalic acid and ethylene glycol, which lead to polyethylene terephthalate, better known by the abbreviation PET, as mentioned hereinbefore.

In the present document, the term PET also covers a homopolymer obtained merely from monomers of terephthalic acids or their esters such as dimethylterephthalate and ethylene glycol as well as copolymers containing at least 92.5 % in number of recurring ethylene terephthalate units.

According to a preferred feature of the invention, the polyester contains at least one crystallisation retarder for slowing down or delaying crystallisation of the polyester, in particular during cooling of the moulded or injected article such as a preform, in order to obtain crystallisation into very small crystals, while avoiding spherolitic crystallisation, and to be able to produce a transparent article of which the walls do not exhibit haze, with acceptable mechanical properties.

These crystallisation retarders are difunctional compounds such as diacids and/or diols added to the mixture of monomers before or during polymerisation of the polyester and well-known by the person skilled in the art (see EP 041 035 and EP 1 417 247).

This is because a reduction in the intrinsic viscosity generates, in a polymer, macromolecules with smaller dimensions and less pressure drop over the entire length of the cavity when it is being filled with a view to forming the thin-walled 10 preform 1, which makes it possible to obtain, for a same injection pressure, an aspect ratio u that is higher and is especially greater than the value 45 imposed for moulding current preforms.

These processes and the use of a low IV polymer, such as defined above, allow to easily and effectively ensure the filing of a mould cavity for producing thin-walled 10 preforms 1 with a thickness e less than 2 mm and an aspect ratio u > 45, preventing the melt of flowing through the thin-walled cavity. They also allow also to obtain a thin-walled 10 preform 1 in which the thin wall 10 does not tear during the stage of stretching of said thin-walled 10 preform 1.

Exceeding the threshold values of the thickness e and of the aspect ratio u makes it possible to increase the dimensions of a preform and therefore to reduce the stretching ratios in order to limit the shrinkage effects of a final bottle, obtained by the method of the present invention with such a thin-walled preform, during its disinfection treatment phase. On the other hand, it makes it possible to retain the same amount of material of the preform despite the increase in its dimensions by reducing its wall thickness e or to achieve a saving in material relative to a current preform of the same dimensions.

For example, it has been observed that for a 50 cl final bottle, having a maximal outside perimeter Pb = 196.5 mm; and a lateral half-length L(½) = 253.7 mm, made from a preform X, having a weight p = 14.5 g, a length 1= 78.0 mm, an average perimeter of the neutral fiber Pp = 52.0 mm and a lateral half-length 1(½) = 64.2 mm, the stretching ratios are equal to: a = 3.87; b = 3.90 and c = 15.1 and that for a 50 cl bottle made from a preform Y of substantially the same weight p = 14.2 g, as that of the preform X but having larger dimensions, namely 1 = 86.0 mm; Pp = 56.5 mm and 1(½) = 72.83 mm, the stretching ratios a = 3.56; b = 3.44; and c = 12.2 are lower than those of the preform X.

Likewise, for a 50 cl bottle made of a preform Z of weight p = 12.3 g, below the weight of the preform X but having larger dimensions, namely 1 = 86.0 mm; Pp = 58.4 mm and 1(½) = 72.8 mm, the stretching ratios are also lower than those of the preform X.

Thus, a 50 cl bottle obtained from a preform Y or a preform Z will undergo fewer shrinkage effects than a bottle obtained with a preform X which has lower dimensions (Pp, 1, 1(½)) than those of preform Y and preform Z, for a weight respectively greater than or equal to the weight of the preform Z and the weight of the preform Y.

The reduction in the wall 10 thickness e of a preform 1, having largest dimensions (Pp, 1, 1(½)) than those of a classical preform, allow to compensate for resultant weight increase.

In addition, such a reduction of the wall thickness makes it possible to achieve a reduction in the cooling time by considering that the cooling time in the course of moulding the preform decreases in proportion to the square of the wall thickness of the preform.

Moreover, the thickness e of the wall 10 of a thin-walled preform 1 may vary along the body of said preform 1 (figure 2a), that is to say from the neck 20 of said preform 1 to its base 11, for example in increasing.

In this case, the method of the invention consists in calculating an average thickness e of the wall 10 of the thin-walled preform 1 along its body. The thickness e of the wall 10 of said preform 1 is less than or equal to around 2.0 mm and will preferably be equal to 1.5 mm for a thin-walled 10 preform 1 intended for forming a bottle having a capacity of 50 cl.

In this particular case, the dimensional parameters of the thin-walled preform 1 will be able, for example, to be equal to: length 1 = 86.0 mm; perimeter Pp = 58.4 mm, 1(½) = 72.8 mm resulting in stretching ratios equal to: a = 3.44; b = 3.44 and c = 11.8, with a weight of the preform 1 preferably equal to around 12.3 g.

Still in this particular case, the aspect ratio u will therefore be equal to 57.3, that is to say having a value greater than the threshold value 45 imposed by the constraints for moulding a current preform made of polyester such as PET.

Finally, another subject of the invention is a bottle 2 or similar container (flask, drum, etc.) made of thermoplastic polymer, preferably a thermoplastic polyester, most preferably a polyester comprising at least 92.5 % in number of unities derived of a terephthalic acid ethylen glycol, obtained by method of stretch-blow moulding of a preform 1, particularly by biaxial stretch-blow moulding, according to the present invention. Such a bottle is particularly useful in the food industry, especially for packaging drinks such as spring or mineral waters.

An other object of the present invention is a bottle or similar container, made from a thin-walled preform according to the method of the present invention, more particularly intended to have water, juice carbonated soft drink and the like in it, that may have following weights, depending on its volumes :
● for a volume = 0.5 1: weight < 15 g;
● for a volume = 1.01: weight < 25 g;
● for a volume = 1.51: weight < 30 g.

It goes without saying that a person skilled in the art will know how to adapt the parameters of the conventional process for forming said bottle in order to be able to use a thin-walled preform 1, according to the present invention, so that the process for manufacturing the bottle itself will not be described in more detail here.

Of course, the invention is not limited to the embodiment described and represented in the appended drawing. Modifications remain possible, especially from the point of view of the composition of the various elements or by substitution of equivalent techniques, without thereby departing from the scope of protection of the present invention.

## Claims

1. Method of making a container having an elongated body equipped with a neck, such as a bottle (2), from a preform (1) made of thermoplastic polymer, preferably a thermoplastic polyester, most preferably a polyester comprising at least 92.5 % in number of unities derived of a terephthalic acid and ethylen glycol, the open end of said preform (1) having the shape and the dimensions of the neck (20) of the final bottle (2), said bottle (2) having the following dimensional parameters:
Pb: maximal outside perimeter of the final bottle (2);
L(½): lateral half-length of the final bottle (2), that is to say the length of the final bottle (2) measured from its base (20') to the neck (20) along its shape;
and is **characterized in that** it essentially comprises a step of stretching and blowing a thin-walled (10) preform (1) with, on the one hand, the following dimensional parameters :
Pp: average perimeter of the neutral fibre (3) of the preform (1) measured from the base of the preform (1) to the neck (20), said perimeter being the length of the neutral fibre (3) in a cross section of the preform (1);
1(½): lateral half-length of the preform (1), that is to say the length of the thin-walled preform (1) measured from its base (11) to the neck (20) along its shape;
1: length of the thin-walled preform (1);
e: average thickness of the wall (10) of the thin-walled preform (1), from the base (11) of said preform (1) to the neck (20);
u: aspect ratio, u =1/e;
and, on the other hand, relating to the final bottle (2), the following stretching ratios a, b and c, with : a = Pb / Pp; b = L(½) / 1(½); c = a x b;
said dimensional parameters being set to fulfil the following threshold conditions :
● e<2 mm and u>45;
and the stretching and blowing step being carried out so that said stretching ratios fulfil the following conditions:
● a<5; b<4 and c<16.

2. Method, according to claim 1, **characterized in that** the thin-walled (10) preform (1) is produced by a process which consists essentially in:
- injecting the hot plastic melt of the polymer in a not completely closed mold,
- closing the mold,
- pressing the melt in its final shape, and
- extracting the thin-walled (10) preform (1) from the mold.

3. Method, according to claim 1, **characterized in that** the thin-walled (10) preform (1) is produced by a process which consists in:
- putting the moulding polymer in an open mold,
- closing the mold,
- pressing the melt in its final shape, and
- extracting the thin-walled (10) preform (1) from the mold.

4. Method, according to claim 1, **characterized in that** the thin-walled (10) preform (1) is produced by using intrinsic viscosity (IV) denoting the viscosity of a solution of polymer at a concentration of zero, this value being calculated by determining a viscosity index (VI) in dl/g measured on a polymer solution of 0,5 g of polymer dissolved in 100 ml of a solvent mixture of orthodichlorobenzene and phenol (50/50 by weight) at 25 °C according to norm ISO 1628/5 in date of 15/06/1986 and **in that** intrinsic viscosity (IV) is less than or equal to 0.7 dl/g.

5. Method, according to claim 4, **characterized in that** a polymer is selected which has an intrinsic viscosity (IV), preferably, between 0.45 dl/g and 0.65 dl/g and, most preferably, between 0.5 dl/g and 0.6 dl/g.

6. Method, according to any one of claims 1 to 5, **characterized in that**, for the manufacture of a bottle (2) having a capacity of 50 cl, the dimensional parameters of the thin-walled (10) preform (1) are set to be:
● 1 = 86.0 mm,
● Pp = 58.4 mm, and
● 1(½)= 72.8 mm.

7. Thin-walled (10) preform (1) made of a thermoplastic polymer, preferably a thermoplastic polyester, most preferably a polyester, comprising at least 92.5 % in number of unities derived of a terephthalic acid ethylen glycol, used in a method, according to any one of claims 1 to 6.

8. Bottle (2) or similar container made of thermoplastic polymer, preferably a thermoplastic polyester, most preferably a polyester comprising at least 92.5 % in number of unities derived of a terephthalic acid ethylen glycol, obtained by method of stretch-blow moulding of a thin-walled (10) preform (1), according to any one of claims 1 to 6.

9. Bottle (2) or similar container, according to claim 8, having, for a volume equal to 0.5 1, a weight less than 15 g.

10. Bottle (2) or similar container, according to claim 8, having, for a volume equal to 1.01, a weight less than 25 g.

11. Bottle (2) or similar container, according to claim 8, having, for a volume = 1.5 1, a weight less than 30 g.
